# EUROPEAN PATENT APPLICATION

(11) **EP 0 928 821 A1**
(43) Date of publication of application: **14.07.1999**
(21) Application number: 99100011.8
(22) Date of filing: 04.01.1999
(51) Int. Cl.: C09D 11/00

(54) **Two-phase pigmented ink jet inks**

(30) Priority: 12.01.1998 US 5709
(71) Applicant: E.I. DUPONT DE NEMOURS AND COMPANY, Wilmington, Delaware 19898 (US)
(72) Inventor: Reardon, Joseph Edward, Wilmington, Delaware 19808 (US)
(74) Representative: Towler, Philip Dean

(57) **Abstract**

Two phase ink jet ink compositions are disclosed which have an aqueous continuous phase containing water and an ionic component and a non-aqueous, discontinuous phase containing a non-aqueous vehicle, a colorant and an ionic polymer, wherein the ionic polymer functions as a dispersant and a binder and has a ionic charge opposite that of the ionic component in the aqueous phase.

## Description

### BACKGROUND OF THE INVENTION

This invention relates to aqueous inks for ink jet printers, and more particularly, to two-phase aqueous pigmented ink jet inks containing branched polymers which function as both a dispersant and a binder.

Ink jet printing is a non-impact printing process in which droplets of ink are deposited on a substrate, such as paper, fabric, or film, in response to an electronic signal. Low cost and high quality of the output, combined with relatively noise-free operation, have made ink jet printers a more popular option to other types of printers used with computers. Both dyes and pigments have been used as colorants for ink jet inks. The dye-based inks, while in general superior in color properties, have several disadvantages as compared to pigment based inks. The dyes are usually water soluble and remain so after drying on the substrate. They are easily re-dissolved by water spills, and the image smears on contact with felt pen markers. In addition, the dyes exhibit poor light stability relative to pigments and are known to fade even under office lighting. Thus, dye-based inks are often unsuitable for use in applications requiring moisture resistance and greater light stability. Accordingly, pigments are becoming the preferred colorants and much effort has been expended to develop pigmented ink jet inks in recent years.

Aqueous pigmented ink jet inks are know in the art. In general, such inks contain a pigment, a dispersant and an aqueous vehicle. The function of the dispersant is to maintain the pigment (which are insoluble particles) in suspension in the aqueous vehicle. Both polymeric and non-polymeric dispersant have been used in the past, but structured polymeric dispersants, that is, polymer dispersants having a well defined block, graft or branched structure, have been shown to produce more stable dispersions than either non-polymeric dispersants or random polymer dispersants. The structured polymer dispersants, however, are more costly and more labor intensive than the random dispersants and typically are limited in the types of monomers that can be utilized. For example, well defined block polymers can be made using the Group Transfer Polymerization ("GTP") process, but this process is useful only for acrylic and methacrylic polymers.

The aqueous vehicle used in prior art pigmented inks is typically either water or a mixture of water and a water-soluble (or water miscible) organic solvent (known in the art as "co-solvents"). Such inks may also contain conventional ink additives as are appropriate for the particular application, including biocides, humectants, chelating agents, sequestering agents, surfactants and the like. Such inks are also known to contain polymer additives (known in the art as "binders") to obtain desired ink properties such as viscosity, smear fastness, water fastness, and the like.

Although two-phase inks are known for other applications, prior art pigmented aqueous ink jet inks are single-phase systems. US Patent 5,531,816 discloses a microemulsion ink composition in which the pigment is dispersed in a water-insoluble organic component and then microemulsified in an aqueous vehicle using an amphiphile. The term "microemulsion" is defined to mean a thermodynamically stable, isotropic solution of water, the water insoluble organic component and the amphiphile. Thus, while the ink disclosed in US 5,531,816 contains an aqueous component and a non-aqueous component, the microemulsion does not scatter light and is a single-phase system. In addition, it has been difficult to make stable inks taught in US 5,531,816 using known "oil-based" polymeric dispersants.

Despite the improvements made in pigmented ink jet inks in the recent past, there is still a need for inks to reduce the cost associated with using structured polymer dispersants in ink jet inks without sacrificing the advantages obtained from their use.

### SUMMARY OF THE INVENTION

The present invention provides a two-phase, pigmented ink jet ink consisting essentially of:
(a) an aqueous, continuous phase comprising water and an ionic component selected from the group consisting of anions and cations;
(b) a non-aqueous, discontinuous phase comprising a pigment, an ionic polymer and at least one water-insoluble organic solvent;
wherein the ionic polymer comprises both a dispersing agent and a binder and wherein the ionic polymer has an ionic charge opposite that of the ionic component in the aqueous phase.

### DETAILED DESCRIPTION OF THE EMBODIMENTS

The essential components of the ink comprise an aqueous vehicle, a pigment, an ionic compound, an ionic polymer dispersant/binder and a non-aqueous vehicle. The inks may contain other ingredients as needed to meet the requirements of a particular ink jet printer or to provide a balance of light stability, smear resistance, viscosity, surface tension, high optical density, and crust resistance. The inks have good stability, smear resistance and water fastness.

**Aqueous vehicle** The aqueous vehicle is water or a mixture of water and at least one water soluble organic solvent. Selection of a suitable mixture depends on requirements of the specific application, such as desired surface tension and viscosity, the selected colorant, drying time of the ink, and the type of substrate onto which the ink will be printed and the like. Representative water-soluble organic solvents that may be selected are disclosed in US 5,085,698. A mixture of water and a polyhydric alcohol, such as diethylene glycol, is preferred as the aqueous vehicle.

If a mixture of water and a water-soluble solvent is used, the aqueous vehicle usually contains from about 30% to about 95% water with the balance (i.e., 70 to 5%) being the water-soluble solvent. The preferred compositions are approximately 60% to about 95% water, based on the total weight of the aqueous vehicle.

The amount of aqueous vehicle in the ink is in the range of approximately 70 to 99.8%, preferably 80 to 99.8%, based on total weight of the ink when an organic pigment is selected; approximately 25 to 99.8%, preferably 70 to 99.8% when an inorganic pigment is selected; and 80 to 99% when a disperse dye is selected.

**Pigments** Useful pigments comprise a wide variety of organic and inorganic pigments, alone or in combination. The pigment particles are sufficiently small to permit free flow of the ink through the ink jet printing device, especially at the ejecting nozzles that usually have a diameter ranging from 10 micron to 50 micron. The particle size also has an influence on the pigment dispersion stability, which is critical throughout the life of the ink. Brownian motion of minute particles will help prevent the particles from settling. It is also desirable to use small particles for maximum color strength. The range of useful particle size is approximately 0.005 micron to 15 micron. Preferably, the pigment particle size should range from 0.005 to 5 micron and most preferably, from 0.01 to 0.3 micron. Representative commercial dry and presscake pigments that may be used in practicing the invention are disclosed in US Patent No. 5,085,698.

Fine particles of metal or metal oxides also may be used to practice the invention. For example, metal and metal oxides are suitable for the preparation of magnetic ink jet inks. Fine particle size oxides, such as silica, alumina, titania, and the like, also may be selected. Furthermore, finely divided metal particles, such as copper, iron, steel, aluminum and alloys, may be selected for appropriate applications.

In the case of organic pigments, the ink may contain up to approximately 30% pigment by weight, but will generally be in the range of approximately 1 to 15%, preferably approximately 1 to 8%, by weight of the total ink composition for most thermal ink jet printing applications. If an inorganic pigment is selected, the ink will tend to contain higher weight percentages of the pigment than with comparable inks employing organic pigment, and may be as high as approximately 50% because inorganic pigments generally have a higher specific gravity than the organic pigments.

**Ionic Polymer** The ionic polymer functions as both a dispersant for the pigment and as a binder in the inks of this invention. Binders are typically added to provide film forming properties to the ink. In addition, the ionic polymer functions to disperse the colorant in the non-aqueous vehicle and to disperse the non-aqueous phase into the aqueous phase, such that no separate surfactants or emulsifiers are needed to "invert" the non-aqueous phase into the aqueous phase.

The ionic polymer may be either cationic or anionic and may have a block, branched or comb structure. The ionic polymer is prepared using a macromonomer containing a polymerizable unit added to typical acrylate, methacrylate or styrene monomers and polymerized using free radical polymerization techniques, as described in US 4,032,698 or by living polymerization techniques such as Group Transfer Polymerization as described in US 4,656,226, the disclosures of which are incorporated herein. The ionic polymers that are selected in practicing the invention have number average molecular weight of below 100,000, preferably below 50,000, and typically in the range of 2,000 to 10,000. The ionic polymer may be present in the amount of 1 to 10%, preferably 2 to 5% by weight, based on the total weight of the ink composition.

Cationic Polymer Cationic polymers suitable for use in the invention comprise a backbone prepared from ethylenically unsaturated units and have at least one cationic moiety, located in either the backbone or the macromonomer, derived from a cationic unit of the general formula: 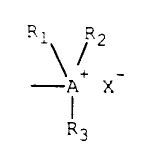 wherein A is N, P, or S; R₁-R₃ are each independently H, alkyl or alkyl ether of 1-20 carbon atoms, or aryl or alkylaryl having 6-15 carbon atoms, with the proviso that R₃ is not present when A is S; and wherein X is an anion selected from the group consisting of halides, conjugate bases of organic acids, and conjugated bases of inorganic acids.

The ionic polymers suitable for practicing the invention are those having both hydrophobic and hydrophilic monomers and are balanced between hydrophobic and hydrophilic monomers to improve the dispersion stability. For useful branched or comb polymers, the hydrophobic portion can be conveniently built in the backbone while the hydrophilic portion is concentrated in the side chains, or vice versa. Functional groups can also be built into the hydrophobic (pigment binding) portions for stronger specific interactions between the pigment and the ionic polymer to give an improved dispersion stability.

The cationic monomers can be in the required quaternary or tertiary configurations as polymerized, or more typically and preferably, are in the form of amine, phosphine, or thioether compounds which are then converted to the quaternary or tertiary state after the formation of the basic polymer structure. Examples of cationic monomers include N,N-dimethylaminoethyl methacrylate, N,N-dimethylaminoethyl acrylate, N,N-diethylaminoethyl methacrylate, N,N-diethylaminoethyl acrylate, t-butylaminoethyl methacrylate, 2-N-morpholinoethyl acrylate, 2-N-morpholinoethyl methacrylate, 2-trimethylammoniumethyl acrylic methosulfate, 2-trimethylammoniumethyl methacrylate, chloride salt, 4-aminostyrene, 2-vinyl pyridine, diphenylvinyl phophine, vinyltriphenylphosphonium bromide, allyl triphenylphosphonium bromide, allylmethylsulfide, and phenylvinyl sulfide. Functional monomers or polymers may be reacted with a molecule to generate the potential cationic centers, such as attaching an amine group by reacting a copolymer of glycidyl methacrylate with dimethylamine.

The cationic polymer may also contain non-ionic ethylenically unsaturated monomers. The hydrophobic monomers can be effectively used to construct pigment binding segments, especially in the case of structured polymers. Useful examples of such monomers include methyl acrylate, ethyl acrylate, n-butyl acrylate 2-ethylhexyl acrylate, lauryl acrylate, stearyl acrylate, phenyl acrylate, benzyl acrylate, 2-phenylethyl acrylate, hydroxyethylacrylate, methyl methacrylate, ethyl methacrylate, n-butyl methacrylate, t-butyl methacrylate, 2-ethylhexyl methacrylate, lauryl methacrylate, stearyl methacrylate, cyclohexyl methacrylate, phenyl methacrylate, benzyl methacrylate, 2-phenylethyl methacrylate, 2-hydroxyethyl methacrylate, styrene, α-methyl styrene, vinyl acetate, vinyl butyrate, and the like. Some of the hydrophilic non-ionic monomers such as those containing the ethylene oxide groups can be effectively used to balance the hydrophobicity/-hydrophilicity ratio. Useful examples of such monomers include 2-(2-methoxyethoxy)ethyl acrylate, 2-(2-methoxyethoxy)ethyl methacrylate, ethoxytriethyleneglycol methacrylate, methoxy polyethyleneglycol (molecular weight of 200-100) monomethacrylate, polyethyleneglycol (molecular weight 200-1000) monomethacrylate, and the like.

The cationic centers may be generated by neutralizing the amine groups with acids selected from the groups consisting of organic acids such as acetic acid, formic acid, oxalic acid, glycolic acid, p-toluenesulfonic acid, etc. and inorganic acids such as hydrochloric acid, sulfuric acid, phosphoric and, nitric acid, etc. Alternatively, the tertiary amines may be converted to tetra-alkylammonium groups by alkylating agents such as benzyl chloride, methyl p-toluenesulfonate, dimethyl sulfate, methyl iodide, etc.

The cationic phosphonium and sulfonium salts are preferably made by reacting a halogented polymer (e.g., a polymer containing 2-bromoethyl methacrylate) with tri-substituted phosphines such as triphenyl phosphine and di-substituted sulfides such as dimethyl sulfide, respectively.

The amount of the cationic polymer depends on the structure, molecular weight and other properties of the polymer, and on the other components of the ink composition.

Anionic Polymer Anionic polymers suitable for use in the invention comprise a backbone prepared from ethylinically unsaturated units and have at least one anionic moiety, located in either the backbone or the macromonomer, derived from a carboxylic or sulfonic acid group.

Useful anionic polymers include copolymers of styrene and maleic acid and their mono esters, copolymers containing acrylic or methacrylic acid, and copolymers containing sulfonic acid monomers. Preferably, the anionic units comprise 5-10% by weight of the polymer and, most preferably are located in the side chains of a comb polymer structure.

**Non-aqueous Vehicle** The non-aqueous vehicle is a water insoluble organic solvent such as esters, ketones, ethers, aromatics, hydrocarbons, and alcohols. The non-aqueous vehicle may be present in the amount of 0.5 to 50%, preferably 5 to 30%, based on the total weight of the ink.

C8 to C22 alkanes, alkenes, and alkynes are preferred hydrocarbon solvents and may be straight chained, branched, or cyclic. Examples include heptane, octane, dodecane, and isocane. Suitable aromatic solvents include toluene, xylene, naphthalene, anthracene, naphthalene sulphonates, substituted naphthalene sulphonates, phenanthracene and mesitylene. Substituted aromatic solvents, such as cresol, benzyl alcohol, anisole, dimethoxy benzene, methyl anisole and resorcinol may also be used. Suitable ketone solvents include straight chained, branched, or cyclic ketones, such as 2 heptanone, cyclohexanone, methyl cyclohexanone. Suitable ether solvents include aliphatic, aromatic, or aralkyl ethers, such as propylene glycol phenyl ether, dipropylene glycol phenyl ether, ethyleneglycol phenyl ether, and diethylene glycol phenyl ether. Aliphatic, aromatic, and aralkyl esters, such as butyl acetate, hexyl acetate, dimethylesters of adipic acid, dimethylesters of a mixture of C4, C5, and, C6 dibasic acids, methyl octanoate, and methyl benzoate may also be used as the non-aqueous vehicle. Straight chained, branched, or cyclic alcohols, such as octanol, cyclohexanol, and dimethylcyclohexanol may also be used to advantage.

**Other Ingredients** Consistent with the requirements of the invention, various types of additives may be used to optimize the properties of the ink compositions for specific applications. As is well known to those skilled in the art, biocides may be used in the ink compositions to inhibit growth of microorganisms. Sequestering agents such as EDTA may also be included to eliminate deleterious effects of heavy metal impurities. Other known additives, such as humectants, viscosity modifiers and other acrylic or non-acrylic polymers made also be added to improve various properties of the ink compositions as desired.

**Ink Properties and Preparation** The steps involved in preparing these inks are: (1) preparation of the non-aqueous dispersion; and (2) inverting the non-aqueous dispersion into the aqueous phase. The non-aqueous dispersion can be prepared by mixing the pigment and dispersant in the non-aqueous solvent. The mixing is preferably done under high shear conditions to produce a uniform dispersion of the pigment particles in the non-aqueous solvent, such as by use of a horizontal mini mill, a ball mill, roll mills such as a 2-roll and 3-roll mills, an attritor, or by passing the mixture through a plurality of nozzles within a liquid jet interaction chamber at a liquid pressure of at least 5000 psi. The non-aqueous dispersion is then inverted into the aqueous vehicle with simple stirring. No emulsifiers or surfactants are necessary to invert the non-aqueous phase into the aqueous phase and the use of high shear equipment is not necessary for this step.

The ink drop velocity, drop volume, and stream stability are greatly affected by the surface tension and the viscosity of the ink. Ink jet inks suitable for use with ink jet printing systems should have a surface tension in the range of about 20 dyne/cm to about 80 dyne/cm and, more preferably, in the range 25 dyne/cm to about 75 dyne/cm at 20°C. Acceptable viscosities are no greater than 20 cP, and preferably in the range of about 1.0 cP to about 10.0 cP at 20°C.

### EXAMPLES

**Ink 1** A macromonomer containing 75 wt% ethylhexyl methacrylate (EHMA), 5 wt% iso-butyl methacrylate (iBMA) and 20 wt% hydroxyethyl methacrylate (HEMA) was prepared as described in US 5,530,070.

A block copolymer was then prepared from the macromonomer. The following ingredients were pre-mixed and added to a dropping funnel attached to a resin kettle containing 67.4 g of macromonomer and 65 grams of toluene and heated to 100⁰C.

| Ingredient | Amount (grams) |
|---|---|
| Vazo® 88 (DuPont Co.) | 2.5 |
| toluene | 19 |
| methyl methacrylate | 37 |
| styrene | 10 |
| ethyl acrylate | 26 |
| hydroxyethyl methacrylate | 20 |
| dimethylaminoethyl methacrylate | 7 |

37 grams of the polymer thus prepared was charged to a minimill containing ceramic media. 19 grams of cyan pigment, BT-617-D (Ciba Geigy) and 44 grams of butyl cellosolve were also added. A fluid pigment dispersion resulted after milling for one hour.

An ink was then prepared by mixing 25 grams of the pigment dispersion in butyl cellosolve and toluene from above was added with stirring to 4.9 g of citric acid and 30.9 g of water. Then, 16.4 g of water, 31 g of imidazolidone and 25 g of ethylene glycol were added and stirring was continued to make an ink having the following composition:

| Ingredient | Amount (wt%) |
|---|---|
| pigment | 2.5 |
| polymer | 2.9 |
| water | 35.5 |
| butyl cellosolve | 11 |
| toluene | 2.3 |
| imidazolidone | 23.3 |
| ethylene glycol | 18.8 |
| citric acid | 3.7 |

**Ink 2** The above process was repeated to make the a yellow pigment dispersion in butyl cellosolve and toluene, except that (1) methacrylic acid was used in place of dimethylaminoethyl methacrylate in making the polymer; and (2) Irgazin yellow pigment (Ciba Geigy) was used in lieu of the cyan pigment in making the dispersion.

An ink was then prepared by mixing 25 grams of the pigment dispersion in butyl cellosolve and toluene from above was added with stirring to 0.1 g of potassium hydroxide and 30.9 g of water. Then, 35.6 g of water, 31 g of imidazolidone and 32 g of ethylene glycol were added and stirring was continued to make an ink having the following composition:

| Ingredient | Amount (wt%) |
|---|---|
| pigment | 2.5 |
| polymer | 2.9 |
| water | 35.0 |
| butyl cellosolve | 12.3 |
| toluene | 0.9 |
| imidazolidone | 23.0 |
| ethylene glycol | 23.4 |
| citric acid | 0.1 |

**Ink 3** A yellow pigment dispersion was prepared as in Ink 2. An ink was prepared by charging 22 grams of the pigment dispersion with stirring to a flask containing 30 grams of water and 0.3 grams of diethylamino ethanol. Then 30.7 grams of water, 5 grams of triethylene glycol, 4 grams of 2-pyrrolidone, 4 grams of tripropylene glycol methyl ether, 2.5 grams Multranol® 4012 (Miles Inc., Pittsburgh, PA) 0.5 grams tetraglyme and 1 gram of Tergitol® 15-S-7 (Union Carbide).

The inks prepared were printed from thermal ink jet printers. In addition, the inks were used to print cotton fabric using a Epson® Model 800 printer (a piezoelectric ink jet printer). The cotton was adhered to paper with pressure sensitive adhesive and then fed through the printer. The fabric was then dried at 150°C for five minutes. The sample had good washfastness as indicated by 90% retention of optical density alter being washed using the AATCC Method 61 procedure.

## Claims

1. A two-phase ink jet ink consisting essentially of:
(a) an aqueous, continuous phase comprising water and an ionic component selected from the group consisting of anions and cations;
(b) a non-aqueous, discontinuous phase comprising a pigment, an ionic polymer and at least one water-insoluble organic solvent;
wherein the ionic polymer comprises a dispersing agent and a binder and wherein the ionic polymer has an ionic charge opposite that of the ionic component in the aqueous phase.

2. The ink of claim 1, wherein the ionic polymer is an anionic polymer.

3. The ink of claim 2, wherein the ionic polymer is prepared from monomers selected from the group consisting of acrylic acid monomers, methacrylic acid monomers, styrene monomers and sulfonic acid containing monomers.

4. The ink of claim 2 wherein the ionic component is potassium hydroxide.

5. The ink of claim 1 wherein the ionic polymer is a cationic polymer.

6. The ink of claim 5 wherein the ionic polymer is prepared from monomers selected from the group consisting of acrylate monomers, methacrylate monomers, styrene monomers and amine containing monomers.

7. The ink of claim 5, wherein the ionic component is citric acid.

8. The ink of claim 1, wherein the colorant is a pigment.
